# EUROPÄISCHE PATENTSCHRIFT

(11) **EP 1 957 770 B1**
(45) Veröffentlichungstag und Bekanntmachung des Hinweises auf die Patenterteilung: **11.02.2009**
(21) Anmeldenummer: 06818489.4
(22) Anmeldetag: 11.11.2006
(51) Int. Cl.: F01N 3/28, F01N 3/021

(54) **LAGERUNGSMATTE FÜR DIE LAGERUNG EINES ABGASKATALYSATORS**
MOUNTING MAT FOR MOUNTING AN EXHAUST GAS CATALYTIC CONVERTER
TAPIS DE STOCKAGE DESTINE A UN POT CATALYTIQUE

(30) Priorität: 28.11.2005 DE 202005018611 U
(43) Veröffentlichungstag der Anmeldung: 20.08.2008
(73) Patentinhaber: Langendorf Textil GmbH & Co. KG, 96364 Marktrodach (DE)
(72) Erfinder: SCHIERZ, Claus, 09599 Freiberg (DE)
(74) Vertreter: Pröll, Jürgen
(86) Internationale Anmeldenummer: PCT/EP2006/010836
(87) Internationale Veröffentlichungsnummer: WO 2007/059869

(56) Entgegenhaltungen:
- EP-A2- 0 319 299
- WO-A-01/00304
- DE-A1- 19 932 255
- DE-U1- 8 019 813
- US-A- 3 876 384
- US-A- 5 028 397

## Beschreibung

Die Erfindung betrifft eine Lagerungsmatte für die Lagerung eines für die Reinigung von Kraftfahrzeugabgasen eingesetzten Abgaskatalysators in einem Katalysatorgehäuse, die mindestens drei Lagen aufweist und durch Zugspannungen aufnehmende Nähte mechanisch verdichtet ist, wobei die Nähte mit einem Nähfaden ausgeführt sind, dessen Temperaturbeständigkeit kleiner ist als die Temperatur der Lagerungsmatte bei einem Betrieb des Abgaskatalysators. Die Lagerungsmatte wird am Umfang eines Abgaskatalysators angeordnet und dichtet den Ringspalt zwischen Abgaskatalysator und Katalysatorgehäuse. Die durch Nähte komprimierte bzw. mechanisch verfestigte Lagerungsmatte kann leicht montiert werden. Beim erstmaligen Betrieb des Katalysators erhitzt sich die Anordnung, wobei die aus einem nicht temperaturbeständigen Material bestehenden Nähfäden sich thermisch zersetzen und sich die Lagerungsmatte daraufhin radial ausdehnt.

Eine Lagerungsmatte mit den eingangs beschriebenen Merkmalen ist aus der Druckschrift DE 199 32 255 A1 bekannt. Bei der bekannten Lagerungsmatte handelt es sich um ein bindemittelfreies Flächengebilde aus mineralischen Fasern, welches durch Steppnähte mechanisch verfestigt ist. Als mineralische Fasern werden Endlosfäden aus einem Stapelfaservorgarn verwendet, die unter Zugspannung durch die Steppnähte im Flächengebilde fixiert sind. Nach der thermischen Zersetzung der temperaturunbeständigen Nähfäden dehnt sich die Lagerungsmatte durch Freisetzen der im Stapelfaservorgarn gespeicherten Verformungsenergie aus. Um die mineralischen Fasern unter Zugspannung in dem Flächengebilde zu fixieren, ist ein aufwändiges Fertigungsverfahren für die Herstellung der Lagerungsmatte notwendig. Auch die Expansionswirkung der Lagerungsmatte ist noch verbesserungsbedürftig.

Vor diesem Hintergrund liegt der Erfindung die Aufgabe zu Grunde, eine Lagerungsmatte mit für einen Abgaskatalysator anzugeben, die ein großes Expansionsvermögen aufweist, welches mit der Inbetriebnahme des Abgaskatalysators freigesetzt wird und sich über längere Zeiträume auch nicht verändert.

Die Aufgabe wird erfindungsgemäß dadurch gelöst, dass zwischen zwei äußeren Lagen aus mineralischen Fasern ein elastisch komprimierbares Vlies aus gekräuselten Metallfäden angeordnet ist. Die Metallfäden sind vorzugsweise durch Zerspanen hergestellte Endlosfäden. Sie können beispielsweise von einem Metallstab abgeschält werden, wodurch sich sehr stark kräuselnde Endlosfäden bilden. Die Metallfäden bestehen beispielsweise aus Stahl, wobei legierte, rostfreie Stähle bevorzugt sind.

Die Expansion der Lagerungsmatte nach einer thermischen Zersetzung der Nähfäden beruht insbesondere auf der Ausdehnung des aus Metallfäden bestehenden Vlieses. Die hohe Elastizität dieser Lage kann ausgelöst werden, um einen Abgaskatalysator dauerhaft und zuverlässig in dem Katalysatorgehäuse zu halten. Es können auch größere Spalte zwischen Abgaskatalysator und Katalysatorgehäuse sicher überbrückt werden.

Als mineralische Fasern der äußeren Lagen sind insbesondere Silikat-Fasern geeignet. Ohne Einschränkung können die mineralischen Fasern jedoch auch einen hohen Anteil an AL₂O₃ aufweisen oder aus einem anderen keramischen Material aufgebaut sein. Im Rahmen der Erfindung können ohne Einschränkung kurze Stapelfasern, Filamente und/oder zerkleinerte Filamente, beispielsweise aus SiO₂, als mineralische Fasern in den äußeren Lagen eingesetzt werden.

Die zur mechanischen Verfestigung der Lagerungsmatte notwendigen Nähte sind als Steppnähte ausführbar. Um eine gleichmäßige Kompression und eine weitgehend konstante Dicke der Lagerungsmatte zu gewährleisten, sind die Nähte zweckmäßig in einem Abstand von weniger als 10 mm, vorzugsweise weniger als 5 mm, angeordnet.

Gemäß einer bevorzugten Ausführung der Erfindung besteht die Lagerungsmatte aus drei Lagen, wobei das Dickenverhältnis der nach einer thermischen Zersetzung der Nähfäden bestimmbaren unkomprimierten Lagen zwischen 1:1:1 und 1:5:1 liegt. Die mittels der Nähfäden bewirkte Komprimierung der Lagerungsmatten ist vorzugsweise weitgehend oder vollständig reversibel, wobei ein Knick der in der mittleren Lage verwendeten Metallfäden durch eine zu starke Kompression und einen damit verbundenen Verlust der elastischen Eigenschaften zu vermeiden ist.

Die Dicke der Lagerungsmatte ist beispielsweise abhängig von den Fertigungstoleranzen und den Abmessungen von Abgaskatalysator und Katalysatorgehäuse. Die Dicke der Lagerungsmatte liegt typischerweise in einem Bereich zwischen 3 mm und 10 mm. Nach einer thermischen Zersetzung der Nähfäden weist die Lagerungsmatte in Folge der Rückstellkraft des aus Metallfäden bestehenden Vlieses dann eine Dicke auf, die mindestens dem zweifachen Wert der Anfangsdicke entspricht.

Durch die mittels der Nähfäden bewirkte mechanische Verdichtung kann die Lagerungsmatte gut montiert werden. Beim erstmaligen Betrieb des Katalysators erhitzt sich die Anordnung, wobei die aus einem nicht temperaturunbeständigen Material bestehenden Nähfäden zerstört werden. Als Material für die Nähfäden sind beispielsweise Kunststofffilamente oder Garne aus Kunststofffasern geeignet, die ab einer Temperatur von etwa 250° C durch Verkohlung zerstört werden. Da die Expansion der Lagerungsmatte insbesondere durch das elastisch komprimierbare Vlies aus gekräuselten Metallfäden gewährleistet wird, können die mineralischen Fasern der äußeren Lagen nach anderen Gesichtspunkten ausgewählt werden. Insbesondere bei der Verwendung von Stapelfasern kann die Langlebigkeit der montierten Lagerungsmatte durch eine um den Rand der Lagerungsmatte umlaufende temperaturbeständige Naht verbessert werden, die ein Lösen einzelner Fasern aus der Lagerungsmatte verhindert.

Im Folgenden wird die Erfindung anhand einer lediglich ein Ausführungsbeispiel darstellenden Zeichnung erläutert. Es zeigen schematisch:
- Fig. 1: die Lagen, aus denen die Lagerungsmatte aufgebaut ist, in einem unkomprimierten Zustand,
- Fig. 2: eine perspektivische Schnittdarstellung durch eine erfindungsgemäße Lagerungsmatte.

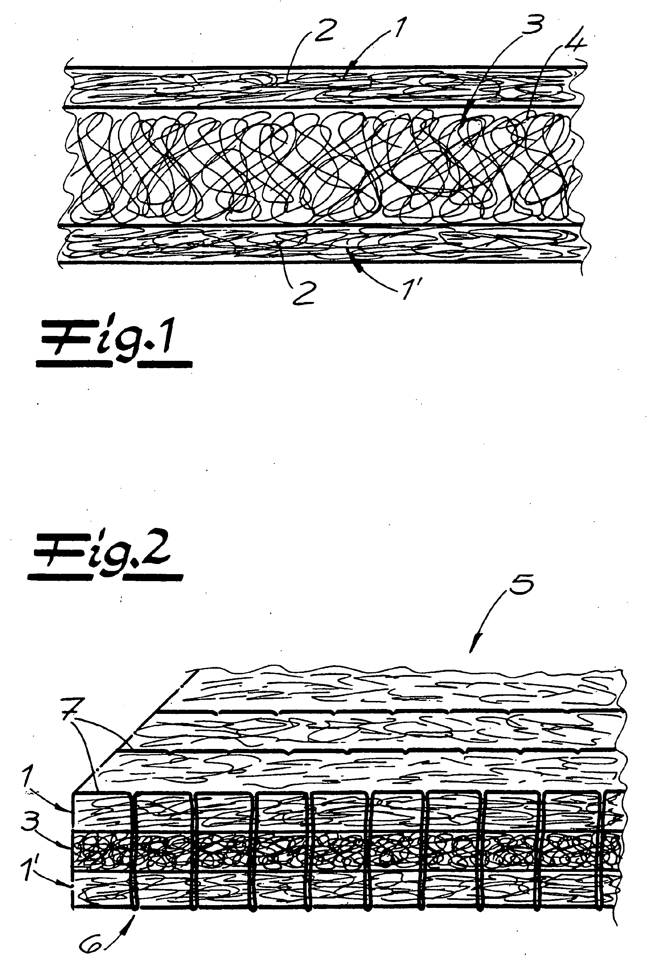

Gemäß der Darstellung in Fig. 1 ist zwischen zwei äußeren Lagen 1, 1' aus mineralischen Fasern 2 ein elastisch komprimierbares Vlies 3 aus gekräuselten Metallfäden 4 angeordnet. Die Metallfäden 4 sind stark gekräuselte Endlosfäden, die durch Zerspanen, z. B. durch Abschälen von einem Metallstab, herstellbar sind. Als Material kommen beispielsweise Stähle, insbesondere legierte, korrosionsbeständige Stähle in Betracht. Das aus Metallfäden bestehende Vlies 3 weist einen großen Elastizitätsbereich auf, in dem es weitgehend reversibel und ohne Knicken der Metallfäden elastisch komprimierbar ist. Die äußeren Lagen 1, 1' sind hingegen weitgehend unelastisch und bestehen beispielsweise aus Silikat-Fasern.

Das Dickenverhältnis der unkomprimierten Lagen liegt zwischen 1:1:1 und 1:5:1. Im Ausführungsbeispiel weist das aus gekräuselten Metallfäden bestehende Vlies im unkomprimierten Zustand eine Dicke von ca. 10 mm auf, während die aus äußeren Lagen beispielsweise etwa 3 mm dick sind.

Eine aus den in Fig. 1 dargestellten Lagen aufgebaute Lagerungsmatte ist in Fig. 2 dargestellt. Die Lagen sind durch Zugspannung aufnehmende Nähte 6, die als Steppnähte ausgeführt sind, mechanisch verdichtet worden. Für die Nähte 6 wird ein Nähfaden 7 verwendet, dessen Temperaturbeständigkeit kleiner ist als die Temperatur der Lagerungsmatte bei einem Betrieb des Abgaskatalysators. Als Nähfaden 7 sind beispielsweise Kunststofffilamente oder Garne aus Kunststofffasern einsetzbar, die bei einer Temperatur von 250° C durch Verkohlung zerstört werden. Die Steppnähte sind in einem Abstand von weniger als 10 mm, vorzugsweise weniger als 5 mm angeordnet, wodurch eine gleichmäßige Komprimierung und eine konstante Dicke der Lagerungsmatte gewährleistet wird.

Die Durch Nähfäden verdichtete Lagerungsmatte 5 weist im Ausführungsbeispiel eine Dicke zwischen 3 mm und 10 mm auf. Nach einer thermischen Zersetzung der Nähfäden dehnt sich die Lagerungsmatte radial aus und nimmt im unkomprimierten Zustand eine Dicke an, die mindestens dem zweifachen Wert der Anfangsdicke entspricht.

Im Ausführungsbeispiel ist noch angedeutet worden, dass die Lagerungsmatte an ihrem Rand eine umlaufende, temperaturbeständige Naht aus einem Metallfaden aufweisen kann, die ein Lösen oder Ausfransen einzelner Mineralfasern am Rand der Lagerungsmatte dauerhaft verhindert.

## Patentansprüche

1. Lagerungsmatte für die Lagerung eines für die Reinigung von Kraftfahrzeugabgasen eingesetzten Abgaskatalysators in einem Katalysatorgehäuse, die mindestens drei Lagen aufweist und durch Zugspannungen aufnehmende Nähte (6) mechanisch verdichtet ist, wobei die Nähte (6) mit einem Nähfaden (7) ausgeführt sind, dessen Temperaturbeständigkeit kleiner ist als die Temperatur der Lagerungsmatte (5) bei einem Betrieb des Abgaskatalysators, **dadurch gekennzeichnet, dass** zwischen zwei äußeren Lagen (1, 1') aus mineralischen Fasern (2) ein elastisch komprimierbares Vlies (3) aus gekräuselten Metallfäden (4) angeordnet ist.

2. Lagerungsmatte nach Anspruch 1, **dadurch gekennzeichnet, dass** die Metallfäden (4) durch Zerspanen hergestellte Endlosfäden sind.

3. Lagerungsmatte nach Anspruch 1 oder 2, **dadurch gekennzeichnet, dass** die mineralischen Fasern (2) der äußeren Lagen Silikat-Fasern sind.

4. Lagerungsmatte nach einem der Ansprüche 1 bis 3, **dadurch gekennzeichnet, dass** die Nähte (6) als Steppnähte ausgeführt und in einem Abstand von weniger als 10 mm, vorzugsweise weniger als 5 mm, angeordnet sind.

5. Lagerungsmatte nach einem der Ansprüche 1 bis 4, **dadurch gekennzeichnet, dass** die Lagerungsmatte (5) aus drei Lagen besteht, wobei das Dickenverhältnis der nach einer thermischen Zersetzung der Nähfäden bestimmbaren unkomprimierten Lagen zwischen 1:1:1 und 1:5:1 liegt.

6. Lagerungsmatte nach einem der Ansprüche 1 bis 5, **dadurch gekennzeichnet, dass** die durch Nähfäden verdichtete Lagerungsmatte (5) eine Dicke zwischen 3 mm und 10 mm aufweist und nach einer thermischen Zersetzung der Nähfäden in Folge der Rückstellkraft des aus Metallfäden bestehenden Vlieses eine Dicke besitzt, die mindestens dem zweifachen Wert der Anfangsdicke entspricht.

## Claims

1. Mounting mat for mounting an exhaust gas catalytic converter, which is used for cleaning motor vehicle exhaust gases, in a catalytic converter housing, which converter comprises at least three layers and is mechanically compacted by seams (6) accepting tensile stresses, wherein the seams (6) are executed with a sewing thread (7) having a temperature resistance lower than the temperature of the mounting mat (5) during operation of the exhaust gas catalytic converter, **characterised in that** a resiliently compressible non-woven material (3) of crinkled metal filaments (4) is arranged between two outer layers (1, 1') of mineral fibres (2).

2. Mounting mat according to claim 1, **characterised in that** the metal filaments (4) are endless filaments produced by cutting up.

3. Mounting mat according to claim 1 or 2, **characterised in that** the mineral fibres (2) of the outer layers are silicate fibres.

4. Mounting mat according to any one of claims 1 to 3, **characterised in that** the seams (6) are executed as quilting seams and arranged at a spacing of less than 10 millimetres, preferably less than 5 millimetres.

5. Mounting mat according to any one of claims 1 to 4, **characterised in that** the mounting mat (5) consists of three layers, wherein the thickness ratio of the uncompressed layers determinable after thermal disintegration of the sewing threads lies between 1:1:1 and 1:5:1.

6. Mounting mat according to any one of claims 1 to 5, **characterised in that** the mounting mat (5) compacted by sewing threads has a thickness between 3 millimetres and 10 millimetres and after thermal disintegration of the sewing threads has as a consequence of the restoring force of the non-woven material consisting of metal filaments a thickness corresponding with at least twice the value of the initial thickness.

## Revendications

1. Tapis de stockage d'un pot catalytique utilisé pour l'épuration des gaz d'échappement de véhicule automobile dans un boîtier de pot catalytique, qui présente au moins trois couches et est comprimé mécaniquement par des coutures (6) absorbant des contraintes de traction, les coutures (6) étant réalisées avec un fil à coudre (7), dont la résistance à la chaleur est inférieure à la température du tapis de stockage (5) lors d'un fonctionnement du pot catalytique, **caractérisé en ce qu'**un voile (3) pouvant être comprimé élastiquement en fils métalliques (4) vrillés est disposé entre deux couches (1, 1') extérieures en fibres (2) minérales.

2. Tapis de stockage selon la revendication 1, **caractérisé en ce que** les fils métalliques (4) sont des fils continus fabriqués par usinage.

3. Tapis de stockage selon la revendication 1 ou 2, **caractérisé en ce que** les fibres (2) minérales des couches extérieures sont des fibres de silicate.

4. Tapis de stockage selon l'une quelconque des revendications 1 à 3, **caractérisé en ce que** les coutures (6) sont réalisées comme des coutures piquées et sont disposées à une distance inférieure à 10 mm, de préférence inférieure à 5 mm.

5. Tapis de stockage selon l'une quelconque des revendications 1 à 4, **caractérisé en ce que** le tapis de stockage (5) se compose de trois couches, le rapport d'épaisseur des couches non comprimées pouvant être déterminées après une décomposition thermique des fils à coudre, est compris entre 1:1:1 et 1:5:1.

6. Tapis de stockage selon l'une quelconque des revendications 1 à 5, **caractérisé en ce que** le tapis de stockage (5) comprimé par des fils à coudre présente une épaisseur comprise entre 3 et 10 mm et possède une épaisseur qui correspond au moins à deux fois la valeur de l'épaisseur de départ, après une décomposition thermique des fils à coudre à la suite de la force de rappel du voile se composant de fils métalliques.
